# EUROPEAN PATENT SPECIFICATION

(11) **EP 2 043 947 B1**
(45) Date of publication and mention of the grant of the patent: **31.10.2012**
(21) Application number: 07866555.1
(22) Date of filing: 17.07.2007
(51) Int. Cl.: B67D 7/36, G05D 7/06, G05D 7/01, B67D 7/04, B67D 7/08, B67D 7/42

(54) **A FLUID DISPENSING GUN IN A WORKSHOP FLUID DISTRIBUTION PLANT**
FLÜSSIGKEITSAUSGABEPISTOLE IN EINER WERKSTATT-FLÜSSIGKEITSVERTEILUNGSANLAGE
TÊTE DE PISTOLAGE DE FLUIDE UTILISÉE DANS UNE INSTALLATION DE DISTRIBUTION DE FLUIDE D'ATELIER

(30) Priority: 17.07.2006 EP 06425492
(43) Date of publication of application: 08.04.2009
(73) Proprietor: Filcar S.p.A., 42100 Reggio Emilia (IT)
(72) Inventor: DI BETTA, Rosolino, 42124 Reggio Emilia (IT); BASCHIERI, Elio, 42100 Reggio Emilia (IT); VIRGA, Giuseppe, 42040 Campegine (IT); GIANNINI, Luca, 42020 Rivalta (IT)
(74) Representative: Colò, Chiara
(86) International application number: PCT/IB2007/002018
(87) International publication number: WO 2008/053286

(56) References cited:
- EP-A1- 0 098 709
- EP-A1- 0 781 725
- US-A- 2 198 487
- US-A- 3 204 659
- US-A- 3 431 944
- US-A1- 2006 021 657

## Description

### TECHNICAL FIELD

The present invention relates to a fluid dispensing gun in a workshop fluid distribution plant.

Specifically, the present invention finds advantageous, but not exclusive, application in a mechanical car repair workshop, to which explicit reference will be made in the following description without however loosing in generality.

### BACKGROUND ART

US 3 204 659 discloses a fluid dispensing system having a single source of liquid pressure, such as a pump, and a plurality of selectively controlled branch dispensing lines each having a control value.

As known, over the past years, an increasing demand for fluid distribution plant solutions in workshops and service centres, and on production lines of motor vehicles for civil, industrial, military or farming use, has been recorded.

In this perspective, workshops have been equipped with the best offered by the market, and both fixed and mobile fluid dispensing solutions (engine lubricant oil, transmission oil, differential oil, radiator liquid, etc.) have received great impetus.

In order to better understand the present invention, it is preferable to outline a traditional system.

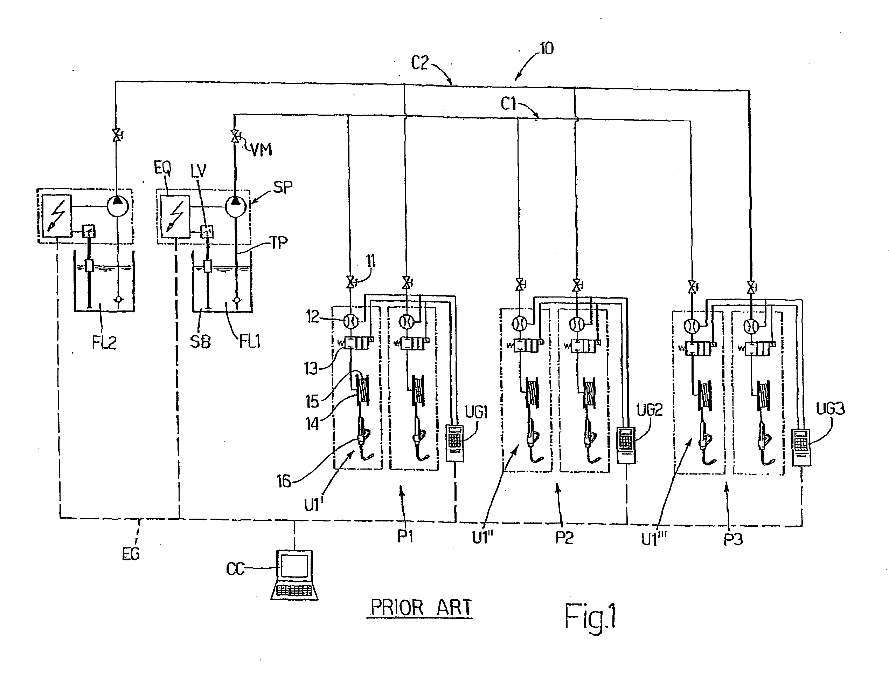

Indeed, in figure 1, number 10 generically shows as a whole a possible traditional distribution system of at least one fluid in a car workshop.

In the embodiment shown in figure 1 (prior art), system 10 comprises two ,equivalent hydraulic circuits C1, C2 for distributing two generally reciprocally different fluids FL1, FL2 respectively, to three fixed stations P1, P2, P3.

Therefore, by describing hydraulic circuit C1, hydraulic circuit C2 is also described.

In hydraulic circuit C1, a tank SB for stocking a first fluid FL1 (e.g. lubricant oil) and a pumping system SP hydraulically connected to the fluid distribution hydraulic circuit C1 towards a first series of users U1', U1" , U1"' belonging to a corresponding fixed station P1, P2, P3, is recognised.

Pumping system SP is connected in suction to a suction tube TP immersed in fluid FL1 and in delivery to hydraulic circuit C1 by means of a manual valve VM.

The operation of pumping system SP is controlled by an electrical panel EQ which monitors the presence of fluid FL1 in tank SB by means of a level gauge LV and communicates with an electronic control system EG for inhibiting the dispensing of fluid FL1 when it is about to finish.

A management unit UG1, UG2, UG3 for each respective fixed position P1, P2, P3, combined with a dedicated PC CC, constitutes the aforesaid electronic management system EG of the entire system 10.

Each user U1', U1" , U1"' is connected to hydraulic fluid distribution circuit C1 by means of a manual valve 11 (figure 1).

Furthermore, in the embodiment belonging to the prior art shown in figure 1, each user U1', U1", U1"' comprises a volume counter 12 and a solenoid valve 13 (normally closed) to shut off the flow of fluid FL1.

Volume counter 12 and solenoid valve 13 are electronically connected to control unit UG1 which governs the dispensing of fluid FL1 to fixed station P1. Further, there is a mechanical reel 14 for a flexible tube 15 ending in a dispensing gun 16. Solenoid valve 13 is normally in "closed" position (shown in figure 1). During dispensing of fluid FL1, a user, by controlling control unit UG1, ensures that solenoid valve 13 is opened, thus allowing the free flow of fluid FL1 from tank SB to dispensing gun 16. At the same time, control unit UG1 records the quantity of dispensed fluid by means of volume counter 12.

For the way that system 10 belonging to the prior art as the one shown in figure 1 is constructed, the choice of pumping system SP, which feeds hydraulic circuit C1, directly affects the flow rate of fluid dispensed by users U1', U1", U1"'.

Again regarding the state of the art, the most common pumping systems SP are based either on positive displacement pumps (e.g. geared pumps) or pneumatic pumps (e.g. piston pumps).

A pumping system SP based on a pneumatic pump is preferable from the point of view of installation and control simplicity, as well as from the economic point of view, but manifests considerable functional limitations.

Indeed, pneumatic pumps are characterised in that their flow rate varies according to the load loss encountered by the fluid, and therefore when they are applied in a system 10 as the one shown in figure 1, it results that:
1. the flow rate of the system is affected by fluid viscosity variations related to temperature;
2. the users closest to the pumping assembly have higher flow rates because they are less affected by the load losses in the system; and
3. if two or more simultaneous dispensing operations are performed, the flow rate of the pump is split between the users which are dispensing.

In conclusion, the main limitation of a fluid distribution plant 10, based on a pumping system SP with pneumatic pump, resides exactly in the impossibility of determining the flow rate dispensed by a generic user U1', U1", U1"'.

Indeed, in some cases, the flow rate could be low (excessively cold fluid, excessive number of contemporaneousnesses, etc.), while in other conditions, at the same dispensing point, the flow rate could be excessive, compromising in this manner the functionality of the entire system.

The solution which will be described below is based on a system capable of selecting the flow rate of each single user, so as to never exceed the set value.

### DISCLOSURE OF INVENTION

Therefore, it is the object of the present invention to make a dispensing gun in a car repair workshop fluid distribution plant, which solves the above-described drawbacks.

A dispensing gun in a car workshop fluid distribution plant is therefore made according to the present invention and to the accompanying claims.

### BRIEF DESCRIPTION OF THE DRAWINGS

The present invention will now be described with reference to the accompanying figures illustrating a non-limitative example of embodiment thereof, in which:
- figure 2 shows a graph with a number of curves, in which the abscissa shows the pressures and the ordinate the flow rates in a fluid distribution plant according to the invention;
- figure 3 depicts a first embodiment of a compensated flow regulating valve (hereinafter named CFRV);
- figure 4 shows a second embodiment of a compensated flow regulating valve (CFRV) ;
- figure 5 depicts a third embodiment of a compensated flow regulating valve (CFRV);
- figure 6 shows a first embodiment of a dispensing gun in a fluid distribution plant in which two valves (CFRV) of the types shown in figures 3, 4, 5 are used;
- figure 7 depicts a second embodiment of a
   dispensing gun, in accordance with the present invention, in a fluid distribution plant in which only one "fixed calibration" valve (CFRV) of the type shown in figure 3;
- figure 8 shows a third embodiment of a dispensing gun in a fluid distribution plant in which only one "fixed calibration" valve (CFRV) of the type shown in figure 5;
- figure 9 shows a dispensing gun provided with a hydraulic circuit shown in figure 6_{.}

### BEST MODE FOR CARRYING OUT THE INVENTION

When evaluating the flow rate dispensed by a system, the components used to make the dispensing point may be considered as fixed bottlenecks which limit the flow of the fluid. Therefore, in order to ensure a certain flow rate from a dispensing point, a pressure adapted to overcome the loss of distributed load attributed to the distributing pipe, plus the concentrated loss of loads attributed to the single components (valves, volume counters, reel, dispensing gun) must be applied to the fluid. Conversely, the running conditions being equal, the dispensed flow rate will vary according to the length of the system, the type of fluid and its viscosity related to temperature.

Given these premises, it is apparent that extreme operating conditions often occur in a system, making it impossible to ensure an optimal flow rate, constant in time, for the various drawing points:
- for example, in one same circuit, the station closest to the pump will have a higher flow rate with respect to the most distant station (different load loss related to the tubing), therefore by regulating the system pressure to ensure the ideal flow rate in the last station, the flow rate in the first station will be excessive; conversely, by reducing the pressure to have an optimal flow rate in the first station, the flow rate in the last station will be insufficient;
- by regulating the system pressure during the winter (colder and therefore more viscous fluid), the flow rate will be excessive during the summer (warmer and therefore less viscous fluid); conversely, if the regulation is made in the summer, the flow rate will be insufficient in winter; and
- furthermore, by regulating the total flow rate of the system to ensure "contemporaneousness" (i.e. fixed stations contemporarily dispensing the same fluid from the same circuit), the flow rate will be excessive when a single station is working; conversely, by limiting the flow rate to disperse from one station without problems, the flow rate will be halved when dispensing from two stations at the same time.

A first possible improvement intervention consists in inserting at least one "compensated flow regulating valve" (CFRV) before each drawing point. In this manner, the system working pressure may be increased, thus satisfying the most demanding operative conditions, while ensuring that the flow rate does not exceed the setting of the CFRV valve in other conditions of use.

The CFRV valves behave as variable bottlenecks which are self-regulated in order to maintain the flow rate of the fluid which crosses them constant while the circuit working pressure varies. This peculiarity makes them particularly useful in fluid distribution plants, given the need to regulate the flow rate of the dispensing point and that, as previously described, the system working pressure is subject to continuos variations (related to temperature, contemporaneousness, distance from the pump, etc.).

In other words, a CFRV valve behaves as a variable bottleneck which, inserted in a hydraulic circuit, allows to limit the flow to a predetermined value. Practically, the fluid crosses a bottleneck which produces a pressure drop between an inlet point A and an outlet point B proportional to the flow rate squared; pressure P_{A} pushes a shutter which tends to further close the passage, while pressure P_{B}, combined with a calibration spring, opposes to the displacement of the shutter, thus "compensating" the thrust of P_{A}. The force of the spring determines the value ΔP_{AB} over which the valve intervenes and flow rate is limited.

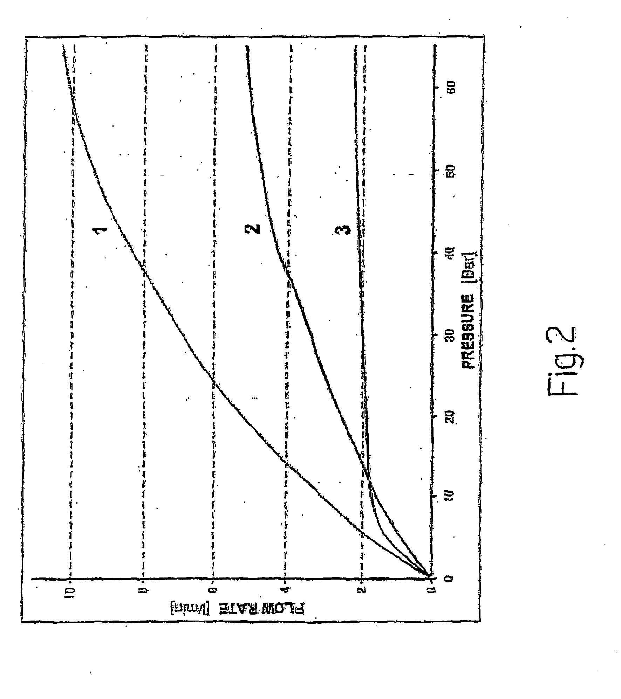

The comparative diagram shown in figure 2 illustrates the flow rate trend in a hypothetical circuit according to pressure for three particular cases:
- Curve 1 shows the flow rate trend without adopting any type of flow controlling valve;
- Curve 2 shows the flow rate trend by inserting a normal flow limiting valve;
- Curve 3 shows the flow rate trend by inserting a CFRV valve.

As it will be appreciated, in the diagram in figure 2, by using a CFRV valve, it is possible to maintain the flow rate in the circuit approximately constant, also in the presence of significant pressure variations.

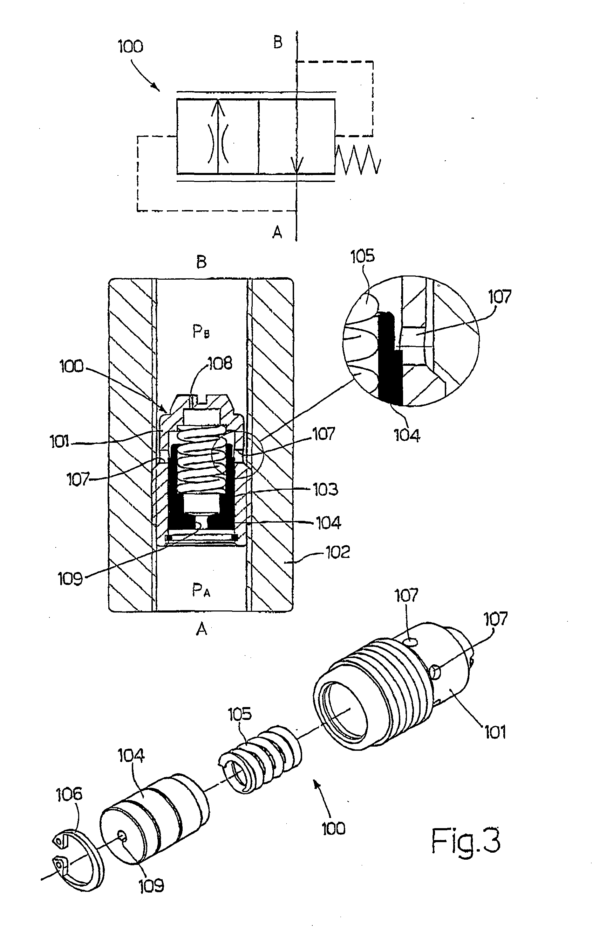

Figures 3, 4, 5 show three types of CFRV valves.

The first type of CFRV valve shown in figure 3 is characterised in that it has a fixed flow rate value predetermined by the manufacturer. It generally appears as a "cartridge valve", i.e. as an insert (externally threaded or cylindrical with sealing o-ring) to be installed inside a valve block or a union socket. The CFRV valve is inserted in line to the system, so that the flow is forced to cross the CFRV valve itself.

Figure 3 shows an example of such CFRV valve with an external threading to be fastened in a union column with through threaded hole. A different form (not shown) contemplates a cylindrical body with sealing o-ring to be "snappingly" positioned in a valve block.

A "fixed calibration" CFRV valve 100 is shown in figure 3. Such CFRV valve 100 comprises an externally threaded central body 101 fastened in a column 102 which acts as a union element to the system. A seat 103 is obtained within central body 101a for a piston 104 which pushes on a spring 105 and is held in place by a Seeger ring 106.

Central body 101 presents a series of radial holes 107 and an axial hole 108 for the passage of the fluid. Similarly, piston 104 presents an axial hole 109 through which the fluid enters in CFRV valve 100. When the flow crosses CFRV valve 100 going from A to B, it is forced to cross hole 109 being subjected to a first pressure drop from "upstream" to "downstream" of the CFRV valve. Such pressure difference Δp=P_{A}-P_{B} pushes piston 104 which compresses spring 105 and is detached from the initial position determined by Seeger ring 106. In its movement, piston 104 occludes holes 107 through which the fluid flows from CFRV valve 100, causing a further deceleration of the flow.

In the case in which piston 104 completely covers holes 107, by effect of a sudden pressure increase (water hammer), hole 108 allows pressure P_{A} to be released, preventing CFRV valve 100 from remaining jammed in the closed position.

Otherwise, if CFRV valve 100 is fitted in the opposite way, i.e. the flow crosses it from B to A, the Δp which is established participates with spring 105 in maintaining piston 104 in home position. CFRV valve 100 will thus behave as a fixed bottleneck crossed by the fluid, with a flow rate which varies according to pressure, as shown by curve 2 in the diagram in figure 2.

The final effect of this system is that the circuit pressure variations are "compensated" by a displacement of piston 104. Piston 104 finds a new balance position with consequent variation of the active passage section of the fluid through holes 107. Consequently, the flow rate is self-regulated, remaining approximately constant also in presence of high variations of pressure P_{A}.

CFRV valves of different "size" and "nominal flow rate" are commercially available, where "size" means the external diameter of the body, which is made according to normalised hydrodynamic component diameters (e.g. 1/4", 3/8" threaded valves, etc.). The "nominal flow rate" is instead the flow rate maintained constant by CFRV valve which depends on the diameter of hole 109 made in piston 104, by the force of spring 105 and its preload. The appropriate combination of these parameters (dimension of main body 101, diameter of hole 109, force and preload of spring 105) allows to make a large range of CFRV valves for satisfying any nominal flow rate need, although the manufacturers generally operate a choice, manufacturing only the most used CFRV valves (e.g. series 0.5-1-2-3-4-8 l/min on a 1/4" main body).

The previous paragraph shows that it is possible to determine the nominal flow rate of a CFRV valve by acting on various parameters, including the preload of the spring. The constructive elements being equal, the initial detachment force of the piston and thus the flow rate beyond which the CFRV valve trips by varying the preload are varied. Practically, if curve 3 of the diagram in figure 2 shows the characteristic curve of a CFRV valve, by increasing or decreasing the preload of spring, a parallel curve displaced either upwards or downwards also by 50% is obtained.

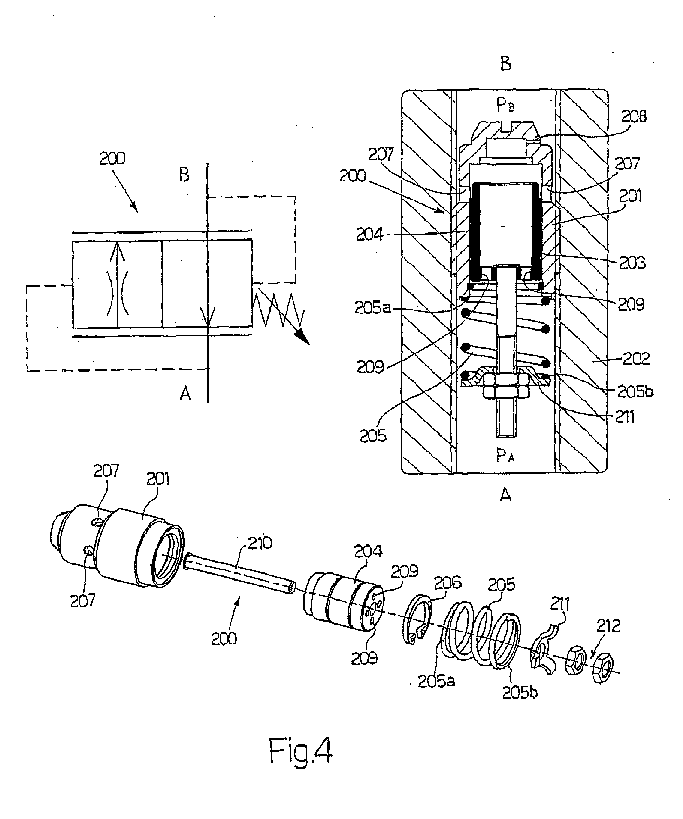

The "adjustable calibration" CFRV valves of the type shown in figure 4 exploit this principle for making a component in which it is possible to "calibrate" the nominal flow within a certain margin. This allows either to set the required flow rate with extreme precision or to regulate the CFRV valve on a flow rate value not available for the "fixed calibration" models made in series, as those shown in figure 3.

Constructively, this type of CFRV is similar to the "fixed calibration" version, described with reference to figure 3, with the sole difference that the spring is externally mounted on a threaded pin, instead of being encapsulated in the main body, so that it is possible to regulate the preload with a screw system (see below).

Figure 4 shows an example of such "adjustable calibration" CFRV valve 200 in which a main body 201, of the type with external threading, mounted in a column 202 are recognisable. A piston 204 held in seat by a Seeger ring 206 and a pin 210 keyed onto piston 204 for the external assembly of spring 205. One end 205a of spring 205 abuts on main body 201, while the other end 206b rests on a plate 211 locked on pin 210 by means of a pair of nuts 212. In this manner, the thrust of spring 205 is transmitted to piston 204 by means of pin 210 and furthermore the preload of spring 205 may be varied by either loosening or fastening nuts 212.

The operation of this CFRV valve 200 is identical to that previously described with reference to figure 3.

Indeed, the fluid inlet with holes 209 (only the position of the holes varies to allow the axial assembly of pin 210) is recognised; furthermore, outlet holes 207 and exhaust hole 208 are visible.

Also this type of CFRV valve 200, as the previous CFRV valve 100, is of the "cartridge" type (external threaded insert or cylindrical with sealing O-ring), available in various "sizes" and with different "nominal flow rates" (in this case, a value about which flow rate regulation is possible). CFRV valve 200 is normally inserted and concealed inside valve blocks or union columns; therefore, the calibration of CFRV valve 200 may only be performed with circuit open, so as to reach the regulation system of spring 205.

The type of CFRV valve 200 described with reference to figure 4 allows to vary the-nominal working flow rate only by regulating the preload of spring 205. This system is certainly cost-effective and versatile, but presents the drawback of not allowing a regulation during operation, making the correct regulation of the CFRV valve 200 itself difficult and complex. Indeed, whenever the calibration of spring 205 needs to be modified, the hydraulic system must be discharged, the union (or block) containing the CFRV valve must be disassembled, spring 205 must be calibrated and the circuit must be remounted.

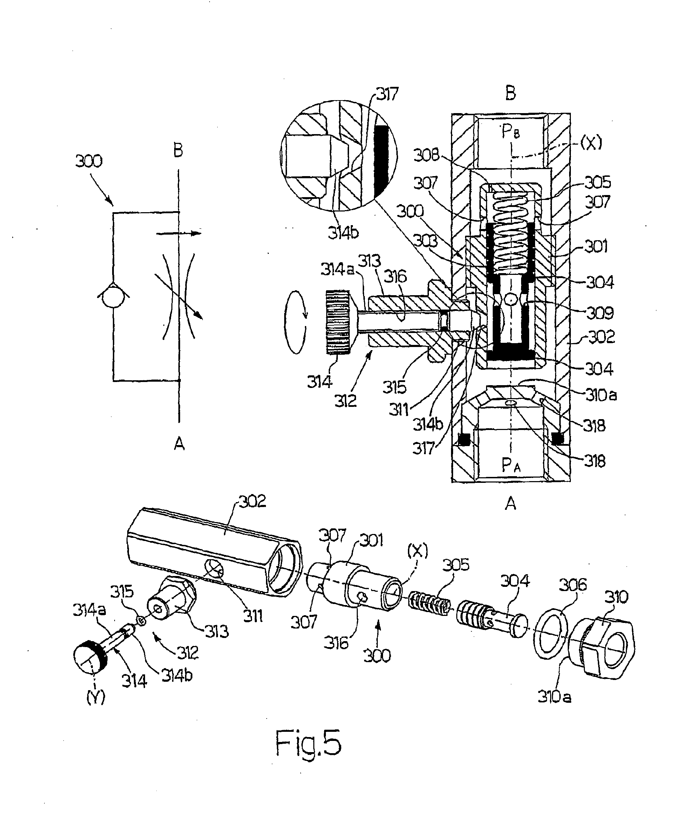

The model of a CFRV valve 300 shown in figure 5 excellently solves these drawbacks and allows to act, by means of a knob external to the component, on the regulation of the nominal flow rate of the CFRV valve without removing the component from the circuit. Indeed, with this CFRV valve, the regulation may be also performed during the operation of the system, with immediate effect of the performed manoeuvre.

The regulation of CFRV valve 300 is obtained also by modifying the active section of the fluid inlet hole. In this manner, working pressure P_{A} being equal, it is possible to vary the pressure drop Δp which governs the operation of the CFRV valve, thus obtaining a different value of the nominal flow rate value of the component. Unlike CFRV valve 200 seen above, which allows a limited flow rate variation, with this type of CFRV valve 300, the regulation spans from no flow rate (hole d1 completely closed) to the maximum flow rate allowed by the size of the component (hole d1 completely open), thus satisfying all the application needs with a single CFRV valve 300.

Figure 5 shows the parts which form CFRV valve 300. A main body 301 fitted on a special column 302, which in this embodiment is an integral part of CFRV valve 300, may be recognised; in main body 301, there is a piston 304 accommodated in a seat 303, with a spring 305 which abuttingly pushes it against a flat face 310a of a ring nut 310 fastened onto column 302; the hydraulic sealing between ring nut 310 and column 302 is guaranteed by a seal 306.

A hole 311 for the assembly of a flow regulating device 312 is present on the side of column 302, orthogonally to axis (X) of CFRV valve 300. Device 12 comprises a turret 313, a control knob 314 and a seal 315.

Turret 313 is fixed to column 302 and presents a hole 316 with threading for receiving knob 314. Threaded stem 314a of knob 314 ends in a tapered part 314b, which coupling with a flared hole 317 made on main body 301, makes an adjustable section bottleneck.

The above-described CFRV valve 300 with reference to figure 5 appears as a hexagonal key column 302 with two threaded holes of equal diameter (ends A and B) for the union to the circuit, and a regulating knob 314 with axis (Y) orthogonal to axis (X) of main body 301.

When the flow crosses CFRV valve 300 from B towards A, piston 304 is detached from spring 305 and is pushed outwards from main body 301, until it abuts against flat face 310a of ring nut 310. In this manner, a passage gap is opened between main body 301 and piston 304 which allows to bypass flared hole 317, allowing the fluid to freely cross CFRV valve 300 without being subjected to significant load losses. In this condition, the course followed by the fluid will go from inlet B to inside main body 301 through completely free holes 307. In virtue of holes 309, the fluid overcomes the seal coupling of piston 304 with the internal seat of main body 301 and finds the passage gap which allows it to bypass flared hole 317 and to freely proceed towards outlet A, through holes 318 obtained in ring nut 310.

By reversing the flow, i.e. by crossing the CFRV valve from A toward B, piston 304 is firstly sucked back inside main body 301 and closes the passage gap.

In this condition, the fluid may overcome piston 304 only through flared hole 317 which puts it into communication with outlet B through holes 307 partially occluded by piston 304 itself. In this condition, the standard configuration characteristic of the operating mode of the CFRV valves may be recognised, with the sole difference that flared hole 317, which causes the Δp to actuate CFRV valve 300, instead of being a precision hole in piston 304 is a flared hole 317 in the cylindrical surface of main body 301 which couples with tapered tip 314b of knob 314.

Tapered tip 314b of knob 314 is used to progressively reduce the active section of the fluid passage. Therefore, as seen for "fixed calibration" CFRV valves, different nominal flow rates are obtained by varying the section of flared hole 317, with the possibility of infinite regulations between no flow rate (flared hole 317 completely occluded) and the maximum flow rate dictated by the size of the component (flared hole 317 all open).

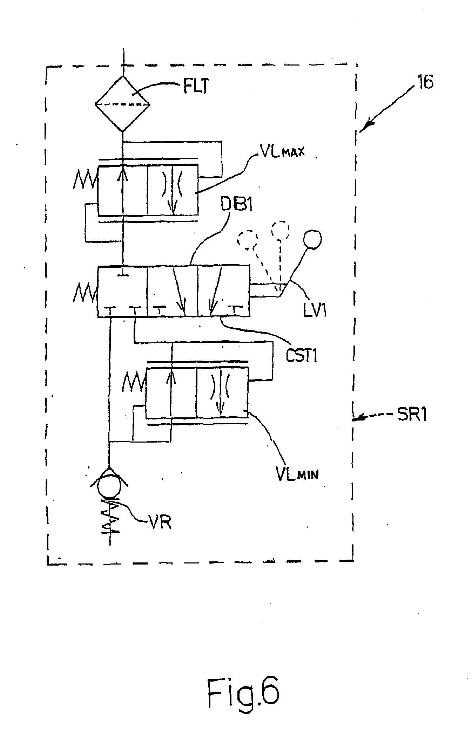

Figures 6, 7, 8, 9 show some examples of application of the CFRV valves just described in a dispensing gun 16.

As will be explained in greater detail below, a valve system using at least two CFRV valves (adjustable or fixed) may be integrated in the dispensing gun, allowing to operate with high fluid pressures, ensuring that the flow rate set by the valve is never exceeded.

Therefore, in the following, some solutions will be taken into consideration which allow the operator to select the flow rate with which to work, by choosing between at least two options:
- "minimum flow rate" (e.g. 2 l/min) for small displacement vehicles or for topping up; or
- "maximum flow rate" (e.g. 6 l/min) for large displacement vehicles.

Finally, there are two valid reasons for preferring a positioning of at least one CFRV valve associated directly to dispensing gun 16.

The first of these is that when the system is not dispensing, the pressure of the circuit rises to the maximum value, especially in the case of circuits employing a pneumatic pump, which stops only when the flow rate is null and the pressure in the circuit is equal to the thrust produced by the pneumatic feed.

In this case, the different flexible tube segments in the system are "inflated" and accumulate a fair amount of pressurised oil. By opening a dispensing gun in these conditions, the effect is of a first rather violent spurt which causes shocks on the gun itself and oil spray.

By associating the CFRV valve directly to the dispensing gun instead, this drawback is completely solved exactly by the operation of the CFRV valve itself, indeed the sudden opening of the gun causes an instantaneously acceleration of the fluid which causes the total closing of the CFRV valve (i.e. the piston resents of the shock and completely closes the holes), in this manner the "water hammer" is completely absorbed.

The second reason for preferring this positioning of the CFRV valve is that if an "adjustable calibration" CFRV valve is used (like the one shown in figure 5) mechanically and directly associated to the dispensing gun itself, the latter in turn becomes adjustable. Indeed, the operator may conveniently manoeuvre the flow rate adjustable knob during fluid dispensing, finding the optimal flow rate and this will imply a further absolutely functional benefit to the system.

Specifically, system SR1 shown in figure 6 comprises a filter FLT, two valves VLmax, VLmin (both of the CFRV type), between which a distributor DB1 (of 3/3 type) and an anti-drip check valve VR is arranged.

The valve VLmax is the one allowing maximum flow rate (e.g. 6 l/min) and will be in all cases crossed by fluid.

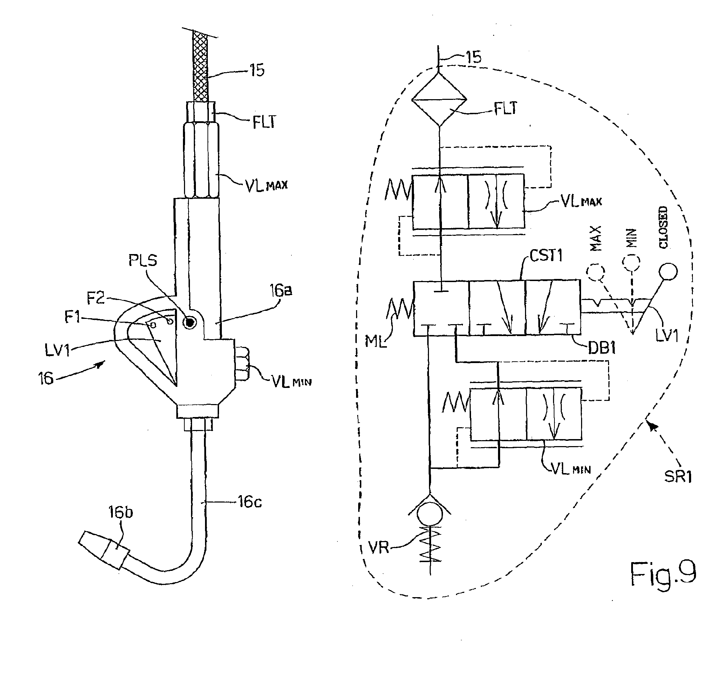

System SR1 may be associated to a dispensing gun (not shown in figure 6; see figure 9). System SR1, in the embodiment shown in figure 9 (see below) is even integral with dispensing gun 16.

In this case, the output flow rate will always and however be limited to a maximum value established by the CFRV valves.

With reference again to figure 6, it may be seen that distributor DB1, positioned downstream of valve VLmax, is manually actuated by an operator by means of a lever LV1 of dispensing gun 16. Distributor DB1 is normally closed and therefore home position envisages the block of the flow rate through dispensing gun 16 (configuration shown in figure 6).

By operating lever LV1 of the dispensing gun, and thus by acting on distributor DB1, a spool CST1 is also displaced from the central position in which it deviates the entire flow rate towards second valve VLmin. This valve VLmin is characterised by a lower plate rating than the previous one, and thus reduces the flow rate dispensed by dispensing gun 16 (e.g. to 2 l/min).

By further acting on lever LV1, spool CST1 is displaced again and positioned in a terminal position where valve Vlmin is bypassed by the fluid.

In this case, the fluid flow rate is limited only by previously crossed valve Vlmax to the plate rating of the same (as mentioned, e.g. 6 l/min).

In this manner, it is possible to choose one of two flow rates so as to adapt to the needs of each dispensing operation, limiting on the other hand dimensions and complexity of the system.

As mentioned, valves VLmax and Vlmin are two CFRV valves.

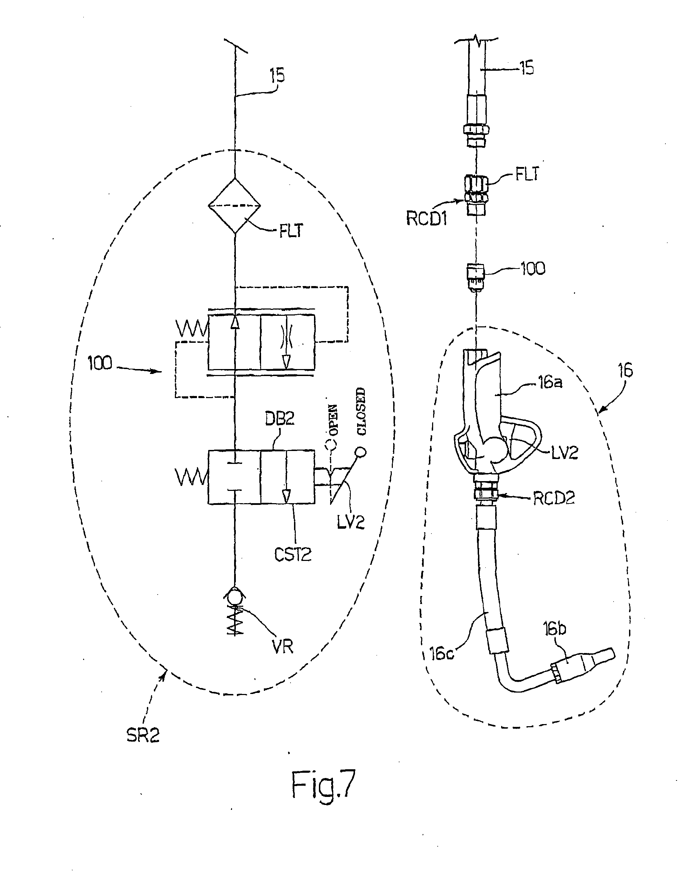

Figure 7 shows an application of a "fixed calibration" CFRV valve 100 integrated in a dispensing gun 16.

As shown in the exploded view, a filter FLT of dispensing gun 16 is generally mounted inside a union RCD1 used to connect dispensing gun 16 to a flexible tube 15. By removing union RCD1, it is possible to insert a "fixed calibration" CFRV valve 100 with threaded body in the same hole used for the union RCD1 with filter FLT.

By remounting union RCD1, CFRV valve 100 remains inserted and concealed in union RCD1 and remains protected by filter FLT which withholds all the impurities which could damage it and, above all, is found downstream of all the flexible tubes in the system, thus also eliminating the shock caused in the last segment of flexible tube 15 connected to dispensing gun 16.

Incidentally, dispensing gun 16 generally comprises a union RCD1 containing filter FLT, a grip 16a, containing a distributor DB2 and a corresponding spool CST2, provided with a lever LV2, a union RCD2 and a beak 16b mechanically connected to grip 16a by means of union RCD2 and a flexible tube 16c.

As known, by pressing lever LV2, an operator operates spool CST2 of distributor DB2 (of 2/2 type) by opening gun 16 which dispenses the fluid.

In figure 7, the assembly formed by CFRV valve 100, distributor DB2, filter FLT and anti-drip check valve VR, mechanically associated to gun 16, form a new system SR2. The operator, by pressing lever LV2 positions spool CST2 of distributor DB2 in "open position" (dotted position of lever LV2). Fluid is thus dispensed from beak 16b for a maximum flow rate established once and for all by the calibration value of CFRV valve 100.

In a further embodiment (not shown in the attached figures and not forming part of the present invention) a CFRV valve is inserted in union RCD2 after having removed flexible tube 16c and beak 16b.

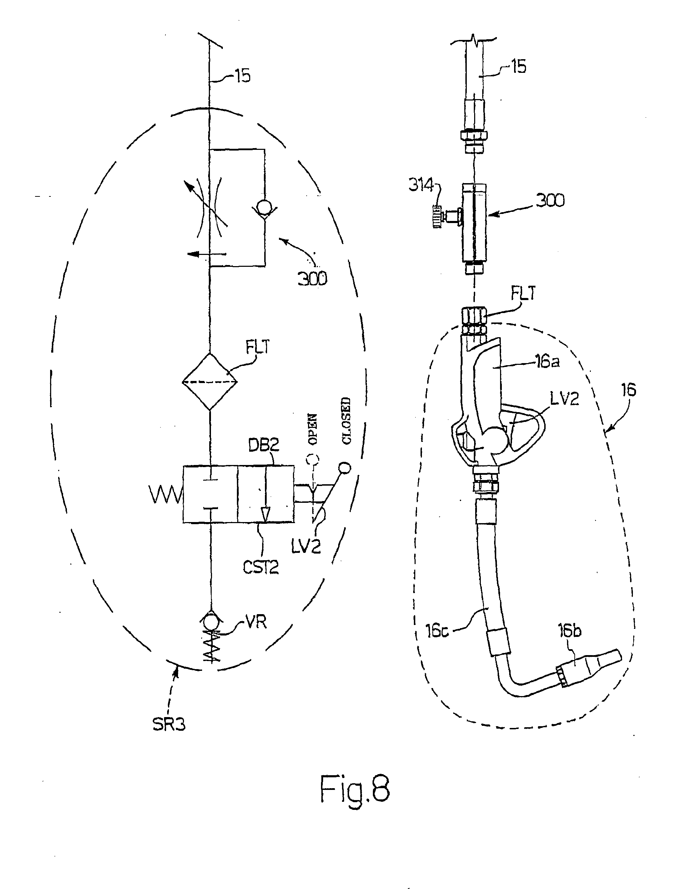

Figure 8 shows another solution with an "adjustable calibration" CFRV valve 300 (as described in relation to figure 5) directly associated to dispensing gun 16.

The assembly formed by CFRV valve 300, distributor DB2, filter FLT and anti-drip check valve VR, forms a system SR3 directly and mechanically associated to dispensing gun 16.

"Adjustable calibration" CFRV valve 300 positioned close to dispensing gun 16 becomes easily accessible by the operator, who may thus set the maximum dispensing flow rate bv operating on the knob 314.

Indeed, also gripping dispensing gun 16 with one hand, the other hand may be used to adjust the oil flow rate by turning knob 314, without interrupting the operation and directly controlling the result of the regulation.

Finally, in the embodiment shown in figure 9, there is a considerable improvement concerning practicality of use.

In this embodiment, the flow rate regulation system is essentially the same as the one shown in figure 6.

As usual, a filter FLT, followed by a first valve VLmax which determines the maximum dispensable flow rate (e.g. 6 l/min), is interposed between fluid feeding flexible tube 15 and dispensing gun 16. Valve VLmax is directly and mechanically joined to main body 16a formed by aluminium of dispensing gun 16 in which a seat for a distributor DB1 (3/3) is obtained. In main body 16a, there is also a housing for a control lever LV1 of distributor DB1 and a button PLS for locking lever LV1 in given positions.

Again in main body 16a there is a seat for a second valve VLmin which determines the minimum dispensable flow rate (e.g. 2 l/min) and an outlet hole of the fluid on which a flexible tube 16c provided with a beak 16b having an anti-drip check valve VR is mounted. Valves VLmax and VLmin are easily accessible so as to be able to remove and replace the cartridges with others having different calibration value.

Distributor DB1 has a return spring ML in the first position in which all the other orifices are closed, a second (intermediate) position in which the flow crosses valve VLmin, and a third position in which valve VLₘᵢₙ is bypassed by the flow. Two positioning holes F1, F2 are contemplated on lever LV1 of the gun, which holes by cooperating with locking button PLS, allow to maintain distributor DB1 in a (position 2), and in a (position 3) .

In other words, in this manner, there is an initial position (position 1, shown in figures 6 and 9) of lever LV1 in which the flow is blocked, an intermediate (position 2) in which the flow crosses valves VLmax and VLmin in sequence exiting with the lowest of the calibration flow rates (2 l/min), and a final position (position 3) in which the fluid crosses only valve VLmax which determines the flow rate thereof (6 l/min).

The benefit of this solution results from the practicality of use, because the flow rate may be changed without having to interrupt dispensing to go and vary the control unit or selector settings.

As seen in relation to figure 6, system SR1 shown in figure 9 comprises a filter FLT, two valves VLmax, VLmin (both of the CFRV type), between which a distributor DB1 (of 3/3 type) and an anti-drip check valve VR is arranged.

It is apparent for a person skilled in the art that similar partial or total integration in the dispensing gun also applies to the two embodiments described with reference to figure 7, 8.

It is also apparent that all the functional elements of the regulating system may be integrated in the gun, and that such a gun may be sold separately from the rest of the fluid distribution plant.

Briefly, the advantages of the present invention are as follows:
- the system flow rate is adapted to the different conditions of use without any human intervention; this allows to always work in the best conditions;
- with the adoption of CFRV valve directly in the dispensing gun the same maximum flow rate may be guaranteed for each dispensing point; and
- finally, the installation of CFRV valves directly in the dispensing gun is easier to implement and most cost-effective with respect to any other point in the distribution system.

## Claims

1. A dispensing gun (16) of a fluid in a workshop distribution system (10) of at least one fluid (FL), **characterised in that** at least one CFRV compensated flow regulating valve (100, 200, 300) is mechanically and directly associated to the dispensing gun (16) itself, and said at least one CFRV valve (100, 200, 300) is insertable in any point of the dispensing gun (16) itself, and
said at least one CFRV valve (100, 200, 300) is inserted in a union (RCD1) placed between a flexible feeding tube (15) and a grip (16a) of the dispensing gun (16).

2. A dispensing gun (16), as claimed in claim 1, **characterised in that** said at least one CFRV valve (100, 200, 300) is integral with the dispensing gun (16) itself.

3. A dispensing gun (16), as claimed in any of the preceding claims, **characterised in that** said at least one CFRV valve (100) is a "fixed calibration" valve.

4. A dispensing gun (16), as claimed in any of the preceding claims 1 and 2, **characterised in that** said at least one CFRV valve (200, 300) is an "adjustable calibration" valve.

5. A dispensing gun (16), as claimed in claim 4, **characterised in that** the calibration of said CFRV valve (200) is performed by varying the preload of a spring (205) contained in
said CFRV valve (200) itself.

6. A dispensing gun (16), as claimed in claim 4, **characterised in that** the calibration of said CFRV valve (300) is performed by varying the active section of an inlet hole (317) of the fluid within the CFRV valve (300) itself by means of a knob (314).

7. A dispensing gun (16), as claimed in claim 1, **characterised in that** said union (RCD1) further contains a filter (FL).

8. A dispensing gun (16), as claimed in any of the preceding claims, **characterised in that** it comprises a first system (SR1) in turn comprising two CFRV valves (VLmax, VLmin) between which a distributor (DB1) (of 3/3 type), manually activatable by means of a lever (LV1) integral with the dispensing gun (16) itself, is positioned.

9. A dispensing gun (16), as claimed in any of the preceding claims 1 to 7, **characterised in that** it comprises a second system (SR2) in turn comprising a single "fixed calibration" CFRV valve (100) and a distributor (DB2) activatable by means of a lever (LV2) integral with the dispensing gun (16) itself.

10. A dispensing gun (16), as claimed in any of the preceding claims 1 to 7, **characterised in that** it comprises a third "adjustable calibration" system (SR3) in turn comprising an "ajustable calibration" CFRV valve (300) and a distributor (DB2) activatable by means of a lever (LV2) integral with the dispensing gun (16) itself.

11. A dispensing gun (16), as claimed in any of the claims 8 to 10, **characterised in that** a button (PLS) is envisaged on the main body (16a) for locking the lever in given positions.

12. A dispensing gun (16) as claimed in claim 11, **characterised in that** at least two position holes (F1, F2) are envisaged on the lever of the gun, which by cooperating with the locking button (PLS), allow to maintain the distributor in given positions.

## Patentansprüche

1. Ausgabepistole (16) eines Fluids in einem Werkstattsystem (10) zur Verteilung von mindestens einem Fluid (FL), **dadurch gekennzeichnet, dass** mindestens ein kompensiertes Stromregelventil (CFRV) (100, 200, 300) mechanisch und direkt mit der Ausgabepistole (16) verbunden ist und das mindestens eine CFRV-Ventil (100, 200, 300) an einer beliebigen Stelle der Ausgabepistole (16) einführbar ist und das mindestens eine CFRV-Ventil (100, 200, 300) in eine Kopplung (RCD1) eingeführt ist, die zwischen einem flexiblen Zufuhrschlauch (15) und einem Griff (16a) der Ausgabepistole (16) platziert ist.

2. Ausgabepistole (16) nach Anspruch 1, **dadurch gekennzeichnet, dass** das mindestens eine CFRV-Ventil (100, 200, 300) einstückig mit der Ausgabepistole (16) ausgebildet ist.

3. Ausgabepistole (16) nach einem der vorangehenden Ansprüche, **dadurch gekennzeichnet, dass** das mindestens eine CFRV-Ventil (100) ein Ventil mit fester Kalibrierung ist.

4. Ausgabepistole (16) nach einem der vorangehenden Ansprüche 1 und 2, **dadurch gekennzeichnet, dass** das mindestens eine CFRV-Ventil (200, 300) ein Ventil mit einstellbarer Kalibrierung ist.

5. Ausgabepistole (16) nach Anspruch 4, **dadurch gekennzeichnet, dass** die Kalibrierung des CFRV-Ventils (200) durch eine Änderung der Vorspannung einer Feder (205), die im CFRV-Ventil (200) enthalten ist, ausgeführt wird.

6. Ausgabepistole (16) nach Anspruch 4, **dadurch gekennzeichnet, dass** die Kalibrierung des CFRV-Ventils (300) durch eine Änderung des aktiven Abschnitts einer Öffnung (317) zum Einlassen des Fluids in das CFRV-Ventil (300) mithilfe eines Knopfes (314) ausgeführt wird.

7. Ausgabepistole (16) nach Anspruch 1, **dadurch gekennzeichnet, dass** die Kopplung (RCD1) ferner einen Filter (FL) enthält.

8. Ausgabepistole (16) nach einem der vorangehenden Ansprüche, **dadurch gekennzeichnet, dass** sie ein erstes System (SR1) enthält, das wiederum zwei CFRV-Ventile (VLmax, VLmin) umfasst, zwischen denen ein Verteiler (DB1) (vom 3/3-Typ) positioniert ist, der manuell mithilfe eines einstückig mit der Ausgabepistole (16) ausgebildeten Hebels (LV1) aktivierbar ist.

9. Ausgabepistole (16) nach einem der vorangehenden Ansprüche 1 bis 7, **dadurch gekennzeichnet, dass** sie ein zweites System (SR2) enthält, das wiederum ein einzelnes CFRV-Ventil (100) mit fester Kalibrierung und einen Verteiler (DB2) umfasst, der mithilfe eines einstückig mit der Ausgabepistole (16) ausgebildeten Hebels (LV2) aktivierbar ist.

10. Ausgabepistole (16) nach einem der vorangehenden Ansprüche 1 bis 7, **dadurch gekennzeichnet, dass** sie ein drittes System (SR3) mit einstellbarer Kalibrierung enthält, das wiederum ein CFRV-Ventil (300) mit einstellbarer Kalibrierung und einen Verteiler (DB2) umfasst, der mithilfe eines einstückig mit der Ausgabepistole (16) ausgebildeten Hebels (LV2) aktivierbar ist.

11. Ausgabepistole (16) nach einem der Ansprüche 8 bis 10, **dadurch gekennzeichnet, dass** am Hauptkörper (16a) eine Taste (PLS) zum Verriegeln des Hebels in bestimmten Positionen vorgesehen ist.

12. Ausgabepistole (16) nach Anspruch 11, **dadurch gekennzeichnet, dass** auf dem Hebel der Pistole mindestens zwei Positionsöffnungen (F1, F2) vorgesehen sind, die durch Zusammenarbeit mit der Verriegelungstaste (PLS) ein Halten des Verteilers in bestimmten Positionen gestatten.

## Revendications

1. Tête de pistolage (16) d'un fluide utilisée dans un système de distribution d'atelier (10) d'au moins un fluide (FL), **caractérisée en ce que** au moins une valve régulatrice de débit compensé (100, 200, 300) est mécaniquement et directement associée à la tête de pistolage (16) elle-même, et ladite au moins une valve régulatrice de débit compensé (100, 200, 300) est insérable en tout point de la tête de pistolage (16) elle-même, et ladite au moins une valve régulatrice de débit compensé (100, 200, 300) est insérée dans un raccord union (RCDl) placé entre un tuyau d'alimentation flexible (15) et une poignée (16a) de la tête de pistolage (16).

2. Tête de pistolage (16), selon la revendication 1, **caractérisée en ce que** ladite au moins une valve régulatrice de débit compensé (100, 200, 300) est solidaire de ladite tête de pistolage (16) elle-même.

3. Tête de pistolage (16), selon l'une quelconque des revendications précédentes, **caractérisée en ce que** ladite au moins une valve régulatrice de débit compensé (100) est une vanne « de calibrage fixe ».

4. Tête de pistolage (16), selon l'une quelconque des revendications précédentes 1 et 2, **caractérisée en ce que** ladite au moins une valve régulatrice de débit compensé (200, 300) est une vanne « de calibrage réglable ».

5. Tête de pistolage (16), selon la revendication 4, **caractérisée en ce que** le calibrage de ladite valve régulatrice de débit compensé (200) est réalisé en modifiant la précharge d'un ressort (205) contenu dans ladite valve régulatrice de débit compensé (200) elle-même.

6. Tête de pistolage (16), selon la revendication 4, **caractérisée en ce que** le calibrage de ladite valve régulatrice de débit compensé (300) est réalisé en modifiant la section active d'un orifice d'entrée (317) du fluide à l'intérieur de la valve régulatrice de débit compensé (300) elle-même au moyen d'un bouton (314).

7. Tête de pistolage (16), selon la revendication 1, **caractérisée en ce que** ledit raccord union (RCD1) comporte de plus un filtre (FL).

8. Tête de pistolage (16), selon l'une quelconque des revendications précédentes, **caractérisée en ce qu'**elle comporte un premier système (SR1) comprenant à son tour deux valves régulatrices de débit compensé (VLmax, VLmin) entre lesquelles un distributeur (DB1) (de type 3/3), pouvant être manuellement activé au moyen d'un levier (LV1) solidaire de la tête de pistolage (16) elle-même, est positionné.

9. Tête de pistolage (16), selon l'une quelconque des revendications précédentes de 1 à 7, **caractérisée en ce qu'**elle comporte un second système (SR2) comprenant à son tour une seule vanne « de calibrage fixe » régulatrice de débit compensé (100) et un distributeur (DB2) pouvant être activé au moyen d'un levier (LV2) solidaire de la tête de pistolage (16) elle-même.

10. Tête de pistolage (16), selon l'une quelconque des revendications précédentes de 1 à 7, **caractérisée en ce qu'**elle comporte un troisième système « de calibrage réglable » (SR3) comprenant à son tour une vanne « de calibrage réglable » régulatrice de débit compensé (300) et un distributeur (DB2) pouvant être activé au moyen d'un levier (LV2) solidaire de la tête de pistolage (16) elle-même.

11. Tête de pistolage (16), selon l'une quelconque des revendications de 8 à 10, **caractérisée en ce que** un bouton (PLS) est prévu sur le corps principal (16a) pour verrouiller le levier dans des positions données.

12. Tête de pistolage (16), selon la revendication 11, **caractérisée en ce que** au moins deux orifices de position (F1, F2) sont prévus sur le levier de la tête de pistolage qui, en coopérant avec le bouton de verrouillage (PLS), permet de maintenir le distributeur dans des positions données.
